# EUROPÄISCHE PATENTSCHRIFT

(11) **EP 2 075 476 B1**
(45) Veröffentlichungstag und Bekanntmachung des Hinweises auf die Patenterteilung: **11.04.2012**
(21) Anmeldenummer: 08020676.6
(22) Anmeldetag: 28.11.2008
(51) Int. Cl.: F16B 5/07

(54) **Befestigungssystem, insbesondere für metallische Bauteile**
Fixing system, especially for metallic components
Système de fixation, notamment pour composants métalliques

(30) Priorität: 24.12.2007 DE 102007062650
(43) Veröffentlichungstag der Anmeldung: 01.07.2009
(73) Patentinhaber: Gottlieb Binder GmbH & Co. KG, 71088 Holzgerlingen (DE)
(72) Erfinder: Tuma, Jan, 71083 Herrenberg (DE); Efe, Metin, 71134 Aidlingen (DE)
(74) Vertreter: Bartels & Partner

(56) Entgegenhaltungen:
- DE-A1-102004 048 464
- DE-A1-102006 015 145
- US-A1- 2004 074 063
- US-A1- 2005 198 790

## Beschreibung

Die Erfindung betrifft ein Befestigungssystem, insbesondere für metallische Bauteile, mit einer metallischen Grundplatte, aus der Verhakungselemente derart ausgeschnitten und aus der Ebene der Grundplatte um im Abstand voneinander parallele Biegelinien hochgestellt sind, wobei jedes Verhakungselement Verhakungsränder für die Zusammenwirkung mit einem zu verankernden Gegenstück des Befestigungssystems aufweist, und wobei als Gegenstück eine Gegenplatte mit der Grundplatte entsprechender Gestaltung von Verhakungselementen vorgesehen ist, die jeweils mit einem zugeordneten Verhakungselemente der Grundplatte verhakbar sind.

Ein derartiges Befestigungssystem ist aus DE 10 2004 048 464 A1 bekannt. Die bekannte Halterungsvorrichtung ist dadurch erhältlich, dass eine Vielzahl von Hakenvorformen unter Belassung mindestens einer Biegekante je Hakenvorform in die Oberfläche der Grundplatte eingeschnitten wird. Weiter werden hakenartige Vorsprünge hergestellt, indem die Hakenvorformen um die Biegekante aus der Grundplatte herausgebogen und gegebenenfalls seitliche Auskragungen an den Vorsprüngen hergestellt oder diese verdrillt werden. Die hakenartigen Vorsprünge sind so um die Biegekante gebogen, dass sie ungefähr senkrecht auf der Grundplatte stehen. Alternativ können die Haken aus einer Vielzahl von Metallschlaufen bestehen, welche von der Oberfläche eines Befestigungsabschnittes vorstehen und gegebenenfalls durchtrennt werden. Die Hakenvorformen sind symmetrisch ausgebildet und so ineinander verschachtelt, dass innerhalb einer Reihe ihre Spitzen auf einer Geraden liegend angeordnet sind. Bei Aneinanderlage von Halterungsvorrichtung und analog ausgebildetem Gegenstück greifen die hakenartigen Vorsprünge der Halterungsvorrichtung und des Gegenstücks ineinander und können auf diese Weise zwei Bauteile ohne gesonderte Befestigungsmittel miteinander verbinden.

Weitere Befestigungssysteme sind bekannt, vgl. DE 10 2006 015 145 A1. Als eine Art metallischer Haftverschluss ermöglichen es diese Befestigungssysteme, die Vorteile der bewährten Haftverschlusssysteme auf Kunststoffbasis, wie sie für eine Vielzahl von Anwendungsgebieten weiteste Verbreitung gefunden haben, auch in solchen Anwendungsfällen zu nutzen, bei denen Kunststoff-Haftverschlüsse nicht einsetzbar sind, beispielsweise wegen fehlender Temperaturstabilität, mechanischer Festigkeit und dergleichen. Bei aus temperaturfesten Metalllegierungen, etwa Edelstahl, bestehenden Verhakungselementen lassen sich derartige metallische Haftverschlüsse auch in Bereichen einsetzen, bei denen hohe thermische und mechanische Belastungen auftreten. Hierbei ermöglichen derartige Befestigungssysteme eine schnelle und einfache Montage von Drittbauteilen ohne dass ein Bedarf an zusätzlichen Halterungsvorrichtungen und deren Betätigung durch spezielle Werkzeuge erforderlich wäre.

An das Betriebsverhalten derartiger Befestigungssysteme sind insbesondere zwei Anforderungen zu stellen. Zum einen muss eine ausreichend große Haltekraft vorhanden sein, um betreffende Bauteile gegen auftretende statische oder dynamische (Schwingungen) Lastkräfte zu sichern. Zum anderen soll die Haltekraft einen vorgegebenen Wert nicht übersteigen, damit ein Lösen der Verhakung für Demontage oder Ersatz von Bauteilen bei Bedarf möglich ist.

Die Erfindung stellt sich im Hinblick auf diese Problematik die Aufgabe, ein hinsichtlich des diesbezüglichen Betriebsverhaltens optimiertes Befestigungssystem in der Art eines metallischen Haftverschlusses zur Verfügung zu stellen.

Erfindungsgemäß ist diese Aufgabe durch ein Befestigungssystem gelöst, das die Merkmale des Patentanspruches 1 in seiner Gesamtheit aufweist.

Gemäß dem kennzeichnenden Teil von Patentanspruch 1 zeichnet sich ein erfindungsgemäßes Befestigungssystem dadurch aus, dass Hakenpaare gebildet sind mit jeweils zwei Verhakungselementen, die zueinander spiegelbildlich gleich geformt sind und mit ihren Breitseiten zueinandergekehrt sind, dass die Verhakungselemente jedes Hakenpaares von der jeweiligen Biegelinie an der Grundplatte bzw. Gegenplatte ausgehend nach oben hin zueinander leicht divergierend unter einem Neigungswinkel zur Flächennormalen der jeweiligen Plattenebene derart geneigt sind, dass bei jedem Hakenpaar die Verhakungselemente kopfteilseitig voneinander einen größeren Abstand besitzen als fußteilseitig, und dass die Richtung der Biegelinien bei miteinander zu verhakenden Hakenpaaren von Grundplatte und Gegenplatte jeweils um 90 Grad verdreht ist, so dass die Verhakung jeweils durch rechtwinkliges Übergreifen der bei der Verhakung zusammenwirkenden Verhakungsränder erfolgt.

Eine wesentliche Besonderheit der Erfindung besteht demgemäß darin, dass die Verhakung in spezieller Weise so erfolgt, dass für jedes Hakenpaar der Grundplatte ein zugeordnetes Hakenpaar vorgesehen ist, das an einer als Gegenstück dienenden Gegenplatte vorgesehen ist, wobei die Hakenpaare an der Gegenplatte entsprechend den Hakenpaaren an der Grundplatte gestaltet sind, abgesehen davon, dass bei den zusammenwirkenden Hakenpaaren jeweils die Biegelinien um 90 Grad zueinander versetzt sind, was bedeutet, dass der eigentliche Verhakungseingriff jeweils durch rechtwinkliges Übergreifen der Verhakungsränder eines Paares durch die Verhakungsränder des zugeordneten Paares erfolgt. Diese Gestaltung ermöglicht es, das System hinsichtlich Haltekraft und Lösekraft optimal zu kalibrieren, indem bezüglich der Dimensionierung und Orientierung der Verhakungsränder die Eigenschaften des betreffenden metallischen Werkstoffes in Rechnung gesetzt werden, insbesondere die Elastizitätseigenschaften.

Erfindungsgemäß ist die Anordnung so getroffen, dass die Verhakungselemente jedes Hakenpaares von Grundplatte oder Gegenplatte ausgehend zueinander divergierend verlaufen. Durch die Wahl des diesbezüglichen Neigungswinkels gegenüber der Plattenebene ist die Größe der Halte- und Lösekraft ebenfalls beeinflußbar.

Vorteilhafte Ausgestaltungen des erfindungsgemäßen Befestigungssystems sind Gegenstände der Unteransprüche.

Vorzugsweise sind die Hakenpaare an Grundplatte und Gegenplatte in einem entsprechenden Muster in zueinander parallelen Reihen angeordnet, wobei die Biegelinien bei in den Reihen aufeinanderfolgenden Hakenpaaren jeweils um 90 Grad zueinander verdreht sind.

Bei besonders vorteilhaften Ausführungsbeispielen sind die Verhakungselemente ebenflächig mit einem an der Biegelinie mit der Grundplatte oder Gegenplatte verbundenen Fußteil und einem sich daran anschließenden Kopfteil gestaltet, das gegenüber dem Fußteil verbreitert ist und an dieses unter Bildung beidseits auskragender Verhakungsränder angrenzt.

In vorteilhafter Weise läßt sich die Größe der Halte- und Lösekraft auf einen gewünschten Optimalwert einstellen, indem die Verhakungsränder zu den Außenseiten der Verhakungselemente hin gegenüber der Ebene der Grundplatte oder Gegenplatte nach oben geneigt verlaufen. Durch die Wahl des Neigungswinkels lassen sich Halte- und Lösekraft in geeigneter Weise dem jeweiligen Einsatzzweck anpassen.

Vorzugsweise ist die Anordnung so getroffen, dass das Kopfteil zur Bildung einer Pilzform der Verhakungselemente einen abgerundeten oberen Endrand aufweist, der die Enden der Verhakungsränder verbindet. Solche Ausführungsbeispiele zeichnen sich dadurch aus, dass der Verhakungseingriff einfach und sicher hergestellt werden kann, weil beim Zusammenbringen der Hakenpaare die gerundeten Endränder der Kopfteile aneinander gleitend geführt sind, so dass selbstzentrierend beim Überlaufen der Enden der Verhakungsränder deren Verhakungsübergriff zustande kommt. Im übrigen läßt sich wie bei Kletten^{®}-Haftverschlüssen aus Kunststoffmaterialien üblich, der Verschluß immer wieder öffnen und schließen, so dass damit ausgestattete Drittbauteile im Versagensfall vor Ort ohne weiteres austauschbar sind.

Nachstehend ist die Erfindung anhand eines in der Zeichnung dargestellten Ausführungsbeispieles im Einzelnen erläutert. Es zeigen:
- Fig. 1: eine zur Verdeutlichung des Erfindungsprinzips in leicht ver- größertem Maßstab gezeichnete perspektivische Schrägan- sicht eines Abschnitts einer metallischen Grundplatte mit dar- in ausgeschnittenen und hochgestellten Verhakungselemen- ten eines Ausführungsbeispieles des erfindungsgemäßen Befe- stigungssystems;
- Fig. 2: eine der Fig. 1 ähnliche perspektivische Schrägansicht, wobei sowohl die Grundplatte als auch eine zugeordnete Gegenplat- te mit Verhakungselementen gemäß dem Ausführungsbeispiel der Erfindung im Zustand von der gegenseitigen Verhakung dargestellt sind;
- Fig. 3: eine der Fig. 2 ähnliche perspektivische Schrägansicht, wobei der Zustand der gegenseitigen Verhakung dargestellt ist, und
- Fig. 4: eine in übertrieben großem Maßstab gezeichnete perspektivi- sche Schrägansicht lediglich zweier miteinander im Verha- kungseingriff befindlicher Hakenpaare des Ausführungsbei- spieles.

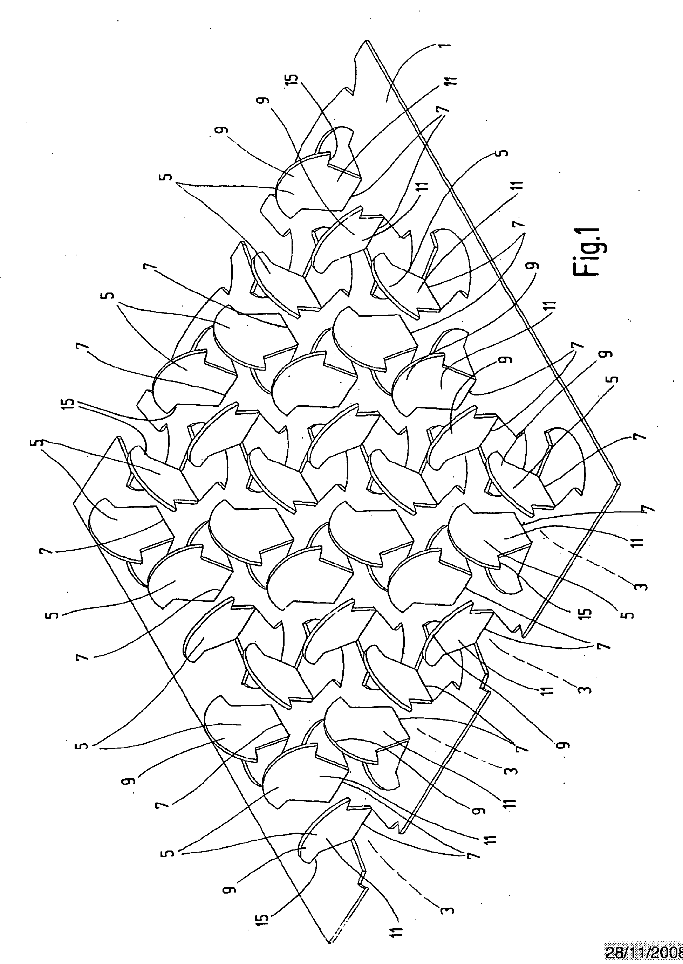

In den Fig. 1 - 3 ist eine ebene Grundplatte aus einer wärmebeständigen Stahllegierung, insbesondere Edel- oder Federstahl, mit 1 bezeichnet, die Bestandteil des erfindungsgemäßen Befestigungssystemes bildet. In einem regelmäßigen Muster mit zueinander parallelen, geraden Reihen 3 (Fig. 1) sind in der Grundplatte 1 Verhakungselemente 5, die in den Fig. nicht sämtliche beziffert sind, ausgeschnitten und aus der Ebene der Grundplatte 1 hochgestellt. Wie aus Fig. 1 deutlich zu ersehen ist, sind in den Reihen 3 aufeinanderfolgend jeweils Hakenpaare gebildet, nämlich in der Weise, dass zwei Verhakungselemente 5, die zueinander spiegelbildlich gleich geformt sind, um Biegelinien 7, die bei jedem Paar im Abstand zueinander parallel verlaufen und in der Zeichnung ebenfalls nicht sämtliche beziffert sind, hochgestellt sind, so dass die Verhakungselemente 5 jedes Paares mit ihren Breitseiten einander zugekehrt sind. Wie ebenfalls aus Fig. 1 entnehmbar ist, sind bei den in den Reihen 3 aufeinanderfolgenden Hakenpaaren jeweils die Biegelinien 7 von einem Paar zum anderen Paar um 90 Grad versetzt. Außerdem sind die Verhakungselemente 5 jedes Hakenpaares, von der Biegelinie 7 an der Grundplatte 1 ausgehend, nach oben hin zueinander leicht divergierend geneigt, so dass bei jedem Hakenpaar die Kopfteile 9 (in den Fig. nicht sämtliche beziffert) voneinander einen größeren Abstand besitzen als die Fußteile 11 (ebenfalls nicht sämtliche beziffert) jedes Hakenpaares.

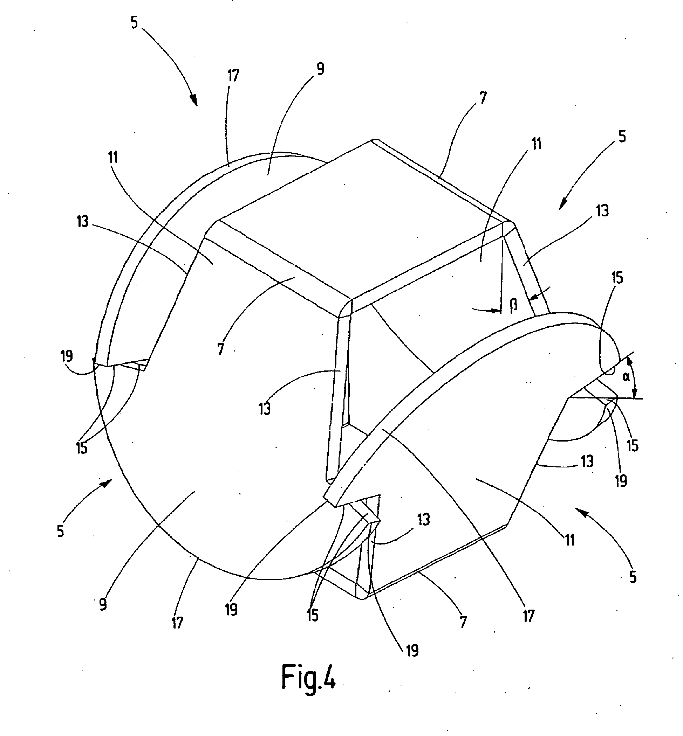

Die Fig. 4 zeigt am Beispiel zweier miteinander in Verhakungseingriff befindlicher Hakenpaare die Einzelheiten der Formgestaltung der Verhakungselemente 5. Hieraus ist ersichtlich, dass von den jeweiligen Biegelinien 7 ausgehend die Fußteile 11 mit geradlinigen Seitenrändern 13, die zueinander divergierend zum Kopfteil 9 hin verlaufen, so dass sich das Fußteil 11 gegen das Kopfteil 9 hin verbreitert. Am Ende der Seitenränder 13, also am Übergang zwischen Fußteil 11 und Kopfteil 9, sind beidseits auskragende Verhakungsränder 15 gebildet. Ein den Teil eines Kreisbogens bildender Endrand 17 des pilzkopfartig erweiterten Kopfteiles 9 verbindet die äußeren Enden 19 der Verhakungsränder 15. In Fig. 4 ist der Neigungswinkel, mit dem die Verhakungselemente 5 jedes Hakenpaares nach oben hin zueinander divergieren mit β bezeichnet. Wie bereits erwähnt, verlaufen die Verhakungsränder 15 jedes Verhakungselementes 5 beim vorliegenden Beispiel nicht parallel zur Ebene der Grundplatte 1, sondern leicht schräg nach oben (also von der Biegelinie 7 weg) leicht geneigt, wobei dieser Winkel in Fig. 4 mit α bezeichnet ist.

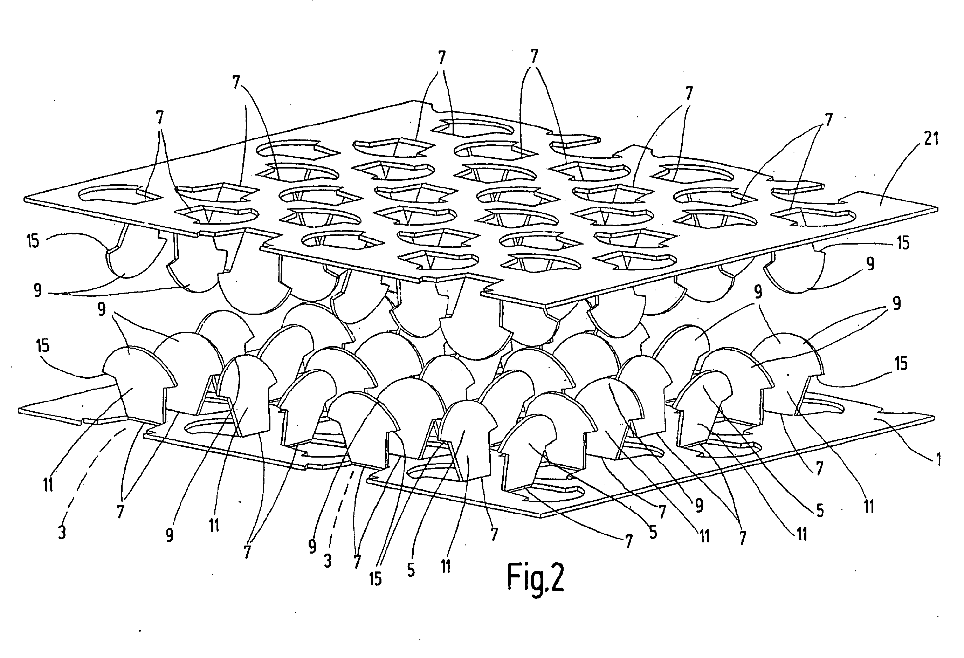

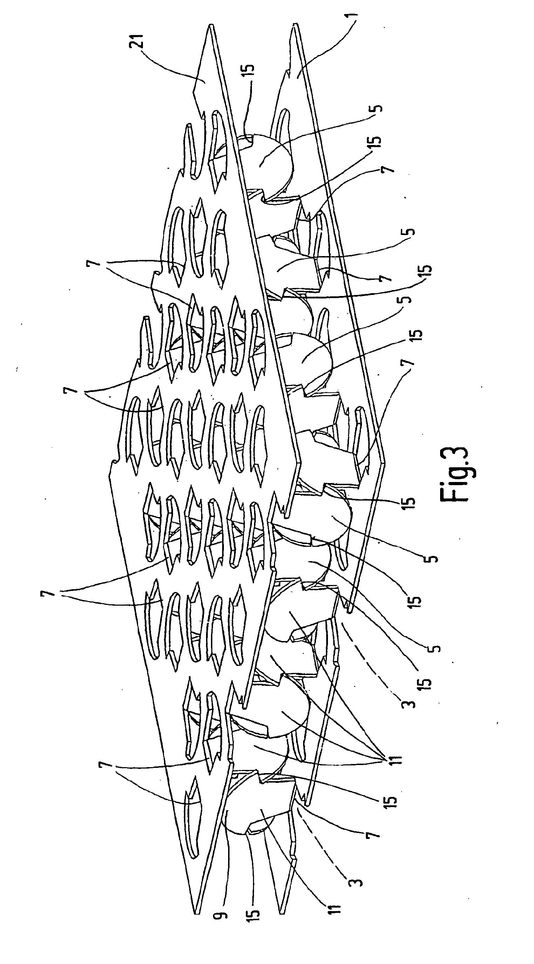

Fig. 2 und 3 zeigen auch das für die Verankerung an der Grundplatte 1 vorgesehene Gegenstück in Form einer Gegenplatte 21. Diese entspricht in sämtlichen Einzelheiten der Grundplatte 1, was bedeutet, dass sie in vorteilhafter Weise mittels der gleichen Fertigungseinrichtung (sowohl Stanzen als auch Hochstellen) hergestellt werden kann. Entsprechend der gleichartigen Anordnung der Hakenpaare erfolgt beim Zusammenfahren, wenn also die Gegenplatte 21 aus der in Fig. 2 gezeigten Position in die Verhakungsposition von Fig. 3 gebracht wird, eine gegenseitige Verhakung in der Weise, dass jedes Hakenpaar der einen Platte 1 mit einem zugeordneten Hakenpaar der anderen Platte 21 verhakt, wie dies in Fig. 4 in Einzeldarstellung verdeutlicht ist. Voraussetzung hierfür ist, dass die Platten 1 und 21 in solcher Orientierung miteinander zusammengebracht werden, dass bei zusammenwirkenden Hakenpaaren die Biegelinien 7 zueinander senkrecht verlaufen, wie dies in Fig. 4 im Einzelnen dargestellt ist.

Bei solcher Orientierung erfolgt die Verhakung, wenn die Platten 1 und 21 aneinander angenähert werden, an den Hakenpaaren selbstzentrierend in der Weise, dass bei der Annäherung des einen Hakenpaares an das andere Hakenpaar die Endränder 17 der zusammengeführten Kopfteile 11 aufeinander gleitend geführt sind, wodurch die Divergenz der Verhakungselemente 5 zunimmt, d. h. der Winkel β vergrößert wird, bis die Endränder 17 der Kopfteile 9 jeweils die Enden 19 der Verhakungsränder 15 überlaufen, so dass die Kopfteile 11 elastisch nach einwärts an den Verhakungsrändern 15 einschnappen, so dass sich an diesen ein rechtwinkliger Übergriff ergibt.

Da andererseits die Verhakungsränder 15 um den Winkel α geneigt verlaufen, werden, wenn eine die Haltekraft übersteigende Lösekraft aufgebracht wird, die Kopfteile 9 der Verhakungselemente 5 nach außen gesteuert, um die Divergenz (den Winkel β) zu erhöhen, bis die Enden 19 der zusammenwirkenden Verhakungsränder 15 miteinander außer Eingriff kommen. Durch Wahl der Winkel α und β und in Entsprechung zu den Elastizitätseigenschaften des die Verhakungselemente 5 bildenden Werkstoffes läßt sich somit eine gewünschte Stärke der Verankerungskraft, die für eine gewolltes Lösen der Verankerung überwunden werden muss, einstellen. Das erfindungsgemäße Befestigungssystem ist somit optimal an jeweils vorherrschende Einsatzbedingungen anpassbar.

Es versteht sich, dass Grundplatte 1 und/oder Gegenplatte 21 anstelle der gezeigten breitflächigen Rechteckform andere Umrisse aufweisen könnten, beispielsweise Band- oder Streifenform. Solche Formen könnten von Vorteil sein, wenn Grundplatte 1 und Gegenplatte 21 an Bauteilen mit unregelmäßiger Oberflächengestalt anzubringen sind. Auch könnten Grundplatte 1 und Gegenplatte 21 zur Anpassung an gewölbte, zu fixierende Bauteile zueinander komplementär gewölbt sein.

Die einzelnen Hakenpaare lassen sich vorzugsweise durch einen Stanz- oder Schneidvorgang aus einem dünnen platinenförmigen Blechwerkstoff gewinnen und als Blechmaterial wird insbesondere ein solches ausgewählt, das mit einer vorgebbaren Federelastizität versehen ist, um dergestalt die flügelartig ausgebildeten Hakenpaare in ihrer Position gegenüber der Biegelinie geringfügig verschwenken zu können. Hieraus resultiert der reversible Löse- und Schließvorgang durch das Ineinandergreifen und Auseinanderbringen der Haftverschlußteile. Sofern die Grundplatte an einem Bauteil festgelegt ist, das stationär angeordnet sein kann, läßt sich eine entsprechend ausgebildete Gegenplatte mit einem Drittbauteil verbunden über die Paare an Verschlußteilen lösbar mit der Grundplatte verbinden, so dass dergestalt im Versagensfall das jeweilige Drittbauteil austauschbar ist. Dergestalt sind eine Vielzahl an technischen Anwendungsfällen denkbar, insbesondere an Orten wo hohe Temperaturen auftreten können.

Die Platinenstärke wird vorzugsweise im Bereich von 0,05 - 3mm gewählt und die genannten Winkel α und β liegen im Bereich von 2 bis 45 Grad, besonders bevorzugt in Bereichen um 15 Grad. Sind, wie dies die Fig. 4 zeigt, die benachbarten Hakenpaare von Grundplatte 1 und Gegenplatte 21 miteinander in Eingriff, entstehen geschlossene kastenförmige Räume, in denen entsprechend gekammert zusätzlich ein Isolationsmaterial einbringbar ist, beispielsweise in Form von Edelstahlwolle, Carbonwerkstoffen, auch in Granulatform, und dergleichen mehr. Durch das Einbringen eines zusätzlichen thermischen Isolationsmaterials läßt sich dergestalt die Kombination von Grundplatte 1 mit Gegenhalteplatte 21 auch als hochtemperaturbeständiges Isolationsbauteil einsetzen.

## Patentansprüche

1. Befestigungssystem, insbesondere für metallische Bauteile,
- mit einer metallischen Grundplatte (1), aus der Verhakungselemente (5) ausgeschnitten und aus der Ebene der Grundplatte (1) um im Abstand voneinander parallele Biegelinien (7) hochgestellt sind,
- wobei jedes Verhakungselement (5) Verhakungsränder (15) für die Zusammenwirkung mit einem zu verankernden Gegenstück (21) des Befestigungssystems aufweist, und
- wobei als Gegenstück eine metallische Gegenplatte (21) mit der Grundplatte (1) entsprechender Gestaltung von Verhakungselementen (5) vorgesehen ist, die jeweils mit einem zugeordneten Verhakungselemente (5) der Grundplatte (1) verhakbar sind,
- **dadurch gekennzeichnet, dass** Hakenpaare gebildet sind mit jeweils zwei Verhakungselementen (5), die zueinander spiegelbildlich gleich geformt sind und mit ihren Breitseiten einander zugekehrt sind,
- dass die Verhakungselemente (5) jedes Verhakungspaares von der jeweiligen Biegelinie (7) an der Grundplatte (1) bzw. Gegenplatte (21) ausgehend nach oben hin zueinander leicht divergierend um einen Neigungswinkel (β) zur Flächennormalen der jeweiligen Plattenebene derart geneigt sind, dass bei jedem Hakenpaar die Verhakungselemente (5) kopfteilseitig voneinander einen größeren Abstand besitzen als fußteilseitig, und
- dass die Richtung der Biegelinien (7) bei miteinander zu verhakenden Hakenpaaren von Grundplatte (1) und Gegenplatte (21) jeweils um 90 Grad verdreht ist, so dass die Verhakung jeweils durch rechtwinkliges Übergreifen der bei der Verhakung zusammenwirkenden Verhakungsränder (15) erfolgt.

2. Befestigungssystem nach Anspruch 1, **dadurch gekennzeichnet, dass** der Neigungswinkel (β) im Bereich von 2 Grad bis 45 Grad, besonders bevorzugt im Bereich um 15 Grad, liegt.

3. Befestigungssystem nach Anspruch 1 oder 2, **dadurch gekennzeichnet, dass** die Hakenpaare in zueinander parallelen Reihen (3) angeordnet sind, und dass bei in den Reihen (3) aufeinanderfolgenden Hakenpaaren jeweils die Biegelinien (7) 90 Grad zueinander verdreht sind.

4. Befestigungssystem nach einem der vorhergehenden Ansprüche, **dadurch gekennzeichnet, dass** die Verhakungselemente (5) ebenflächig mit einem an der Biegelinie (7) mit Grundplatte (1) oder Gegenplatte (21) verbundenen Fußteil (11) und einem sich daran anschließenden Kopfteil (9) gestaltet sind, das gegenüber dem Fußteil (11) verbreitert ist und an dieses unter Bildung beidseits auskragender Verhakungsränder (15) angrenzt.

5. Befestigungssystem nach einem der vorhergehenden Ansprüche, **dadurch gekennzeichnet, dass** die Verhakungsränder (15) zu den Außenseiten der Verhakungselemente (5) hin gegenüber der Ebene der Grundplatte (1) oder Gegenplatte (21) nach oben geneigt verlaufen und einen Winkel (α) mit der jeweiligen Biegelinie (7) einschließen.

6. Befestigungssystem nach Anspruch 5, **dadurch gekennzeichnet, dass** der Winkel (α) im Bereich von 2 Grad bis 45 Grad, besonders bevorzugt im Bereich um 15 Grad, liegt.

7. Befestigungssystem nach einem der Ansprüche 4 bis 6, **dadurch gekennzeichnet, dass** das Fußteil (11) der Verhakungselemente (5) sich mit geraden Seitenrändern (13) von der Biegelinie (7) ausgehend bis zu den am Übergang zum Kopfteil (9) befindlichen Verhakungsrändern (15) verbreitert.

8. Befestigungssystem nach Anspruch 7, **dadurch gekennzeichnet, dass** das Kopfteil (9) zur Bildung einer Pilzform der Verhakungselemente (5) einen abgerundeten oberen Endrand (17) aufweist, der die Enden (19) der Verhakungsränder (15) verbindet.

## Claims

1. A fixing system, in particular for metallic components,
- comprising a metallic base plate (1) from which hooking elements (5) are cut and are raised from the plane of the base plate (1) around parallel bending lines (7) spaced apart from one another,
- each hooking element (5) having hooking edges (15) to cooperate with a counter piece (21) to be anchored, and
- there being provided as a counter piece a metallic counter plate (21) with hooking elements designed to correspond to the base plate (1) and which can respectively be hooked with an assigned hooking element (5) of the base plate (1),
- **characterised in that** hook pairs are formed with respectively two hooking elements (5) which are formed in an identical mirror image to one another and face one another with their wide sides,
- that the hooking elements (5) of each hook pair are inclined from the respective bending line (7) on the base plate (1) or counter plate (21) towards the top and slightly diverging towards one another by an angle of inclination (β) to the surface normal of the respective plate plane such that with each hook pair the hooking elements (5) are further apart from one another at the head part side than at the foot part side, and
- that the direction of the bending lines (7) with hook pairs to be hooked to one another of the base plate (1) and the counter plate (21) is respectively rotated about 90 degrees so that the hooking respectively takes place by right angled overlapping of the hooking edges (15) cooperating during the hooking.

2. The fixing system according to Claim 1, **characterised in that** the angle of inclination (β) comes within the range of 2 degrees to 45 degrees, particularly preferably within the range of around 15 degrees.

3. The fixing system according to Claim 1 or 2, **characterised in that** the hook pairs are arranged in rows (3) parallel to one another, and that with consecutive hook pairs in the rows (3) the bending lines (7) are respectively rotated by 90 degrees in relation to one another.

4. The fixing system according to any of the preceding claims, **characterised in that** the hooking elements (5) are formed planar with a foot part (11) connected to the base plate (1) or counter plate (21) at the bending line (7) and an adjoining head part (9) which is widened in relation to the foot part (11) and is adjacent to the latter such as to form hooking edges projecting on both sides.

5. The fixing system according to any of the preceding claims, **characterised in that** the hooking edges (15) extend towards the outsides of the hooking elements (5) inclined upwards in relation to the plane of the base plate (1) or the counter plate (21) and enclose an angle (α) with the respective bending line (7).

6. The fixing system according to Claim 5, **characterised in that** the angle (α) comes within the range of 2 degrees to 45 degrees, particularly preferably within the range of around 15 degrees.

7. The fixing system according to any of Claims 4 to 6, **characterised in that** the foot part (11) of the hooking elements (5) widens with straight side edges (13) from the bending line (7) to the hooking edges (15) located at the cross-over to the head part (9).

8. The fixing system according to Claim 7, **characterised in that** the head part (9) has a rounded upper end edge (17) in order to form a mushroom shape of the hooking elements (5) and which connects the ends (19) of the hooking edges (15).

## Revendications

1. Système de fixation, notamment pour des éléments métalliques,
- comprenant une plaque (1) de base métallique, dans laquelle des éléments (5) d'accrochage sont découpés et relevés hors du plan de la plaque (1) de base autour de lignes (7) de pliage parallèles et à distance les unes des autres,
- dans lequel chaque élément d'accrochage à des bords (15) d'accrochage pour coopérer avec une pièce (21) antagoniste à arrimer du système de fixation, et
- dans lequel, comme pièce antagoniste, il est prévu une pièce (21) antagoniste métallique ayant une conformation correspondant à la plaque (1) de base d'éléments (5) d'accrochage, qui peuvent être accrochés respectivement à un élément (5) d'accrochage associé de la plaque (1) de base,
- **caractérisé en ce qu'**il est formé des paires de crochets ayant respectivement deux éléments (5) d'accrochage, qui sont symétriques l'un de l'autre comme en un miroir et qui sont tournés l'un vers l'autre par leur grand côté,
- **en ce que** les éléments (5) d'accrochage de chaque paire d'accrochage divergent légèrement l'un de l'autre vers le haut en partant de la ligne (7) de pliage respective sur la plaque (1) de base ou sur la plaque (20) antagoniste d'un angle (β) d'inclinaison à la normale à la surface du plan respective de la plaque, de manière à ce que, pour chaque paire de crochets, les éléments (5) d'accrochage soient du côté de la tête à une distance plus grande l'un de l'autre que du côté du pied, et
- **en ce que** les directions des lignes (7) de pliage, pour des paires de crochets accrochés l'un à l'autre de la plaque (1) de base et de la plaque (21) antagoniste, soient tournées respectivement de 90 degrés, de sorte que l'accrochage s'effectue respectivement par une prise à angle droit des bords (15) d'accrochage coopérant lors de l'accrochage.

2. Système de fixation suivant la revendication 1, **caractérisé en ce que** l'angle (β) d'inclinaison est de l'ordre de 2 degrés à 45 degrés, en étant notamment de préférence d'environ 15 degrés.

3. Système de fixation suivant la revendication 1 ou 2, **caractérisé en ce que** les paires de crochets sont disposées en des rangées (3) parallèles entre elles et **en ce que**, pour des paires de crochets se succédant dans les rangées (3), les lignes (7) de pliage sont tournées respectivement de 90 degrés les unes par rapport aux autres.

4. Système de fixation suivant l'une des revendications précédentes, **caractérisé en ce que** les éléments (5) d'accrochage sont conformés à plat suivant un plan, en ayant un pied (11) relié sur la ligne (7) de pliage à la plaque (1) de base ou à la plaque (21) antagoniste et une tête (9) s'y raccordant, qui est plus large que le pied (11) et qui en est adjacente en formant des deux côtés des bords (15) d'accrochage en porte-à-faux.

5. Système de fixation suivant l'une des revendications précédentes, **caractérisé en ce que** les bords (15) d'accrochage sont inclinés vers le haut vers les côtés extérieurs des éléments (5) d'accrochage par rapport au plan de la plaque (1) de base ou de la plaque (21) antagoniste et font un angle (α) avec la ligne (7) de pliage respective.

6. Système de fixation suivant la revendication 5, **caractérisé en ce que** l'angle (α) est de l'ordre de 2 degrés à 45 degrés, en étant notamment d'environ 15 degrés.

7. Système de fixation suivant l'une des revendications 4 à 6, **caractérisé en ce que** le pied (11) des éléments (5) d'accrochage s'élargit par des bords (13) latéraux rectilignes en partant de la ligne (7) de pliage jusqu'aux bords (15) d'accrochage se trouvant à la transition avec la tête (9).

8. Système de fixation suivant la revendication 7, **caractérisé en ce que** la tête (9) a, pour la formation d'une forme en champignon des éléments (5) d'accrochage, un bord (17) d'extrémité supérieure arrondie, qui relie les extrémités (19) des bords (15) d'accrochage.
